# EUROPEAN PATENT APPLICATION

(11) **EP 2 423 880 A2**
(43) Date of publication of application: **29.02.2012**
(21) Application number: 11178335.3
(22) Date of filing: 22.08.2011
(51) Int. Cl.: G06T 11/00

(54) **Apparatus and method for providing augmented reality (AR) using a marker**

(30) Priority: 25.08.2010 KR 20100082696
(71) Applicant: Pantech Co., Ltd., Seoul 121-792 (KR)
(72) Inventor: Song, Chang-Kyu, 121-792 Seoul (KR); Nam, Jeong-Woo, 121-792 Seoul (KR); Baek, Seung-Yoon, 121-792 Seoul (KR); Lee, Ha-Wone, 121-792 Seoul (KR); Jeong, Eun-Kyung, 121-792 Seoul (KR); Heo, Weon-Hyuk, 121-792 Seoul (KR); Heo, Ji-Man, 121-792 Seoul (KR)
(74) Representative: Herzog, Markus

(57) **Abstract**

An Augmented Reality (AR) providing method using an instant marker or a substitution marker is provided. According to an example, the instant marker or the substitution marker is created based on a 3-dimensional object. A meaning unit of an original 2-dimensional marker is analyzed and a marker factor corresponding to the meaning unit is extracted from the image of an object that is to be used to the instant marker or substitution marker. The meaning unit is mapped to the marker factor to create the instant marker or the substitution marker based on the object, so that a user may use AR using the instant marker or substitution marker.

## Description

### CROSS-REFERENCE TO RELATED APPLICATION

This application claims priority from and the benefit under 35 U.S.C. §119(a) of a Korean Patent Application No. 10-2010-0082696, filed on August 25, 2010, which is incorporated by reference for all purposes as if fully set forth herein.

### BACKGROUND

FIELD

The following description relates to an apparatus and method for mark-based and markless-based Augmented Reality (AR).

DISCUSSION OF THE BACKGROUND

Augmented Reality (AR) is a computer graphic technique of synthesizing a virtual object or virtual information with a real environment so that the virtual object or virtual information may appear as a real object or real information in the real environment.

AR may synthesize virtual objects based on a real world to provide additional information that cannot easily be obtained from the real world. This differs from Virtual Reality (VR), which targets virtual spaces and virtual objects. Thus, unlike existing VR that has been applied to fields such as games, AR may be applied to various real environments.

In order to implement AR, mark-based (or marker-based) object recognition or markless-based object recognition has generally been used. A mark-based object recognition may be a technique of determining whether additional information may be applied to a display scheme by the identification of a mark. Marker-based recognition AR may be used in advertisements. In advertisements, using an AR may cause interest and curiosity by attracting the interest of consumers. A marker as such a medium is generally provided by printing images downloaded through the Internet on an A4 paper or on a product package.

However, because the previous versions of providing a marker to a consumer are directed to providing a printout or downloaded image, AR implementation has not been utilized.

### SUMMARY

Exemplary embodiments of the present invention provide an apparatus and method for providing Augmented Reality (AR) using a marker, the marker being an instant or substitution marker.

Exemplary embodiments of the present invention provide an Augmented Reality (AR) apparatus including a first image acquiring unit to acquire an image of a base marker associated with AR; a second image acquiring unit to acquire an image of an object; a meaning unit analyzer to analyze a meaning unit of the image of the base marker; a marker factor extractor to extract a factor from the image of the object; and a substitution marker creator to map the factor with the meaning unit to create a substitution marker comprising the image of the object and the mapped factor. Exemplary embodiments of the present invention provide a method for providing Augmented Reality (AR), including acquiring an image of a base marker associated with AR; acquiring an image of an object; analyzing a meaning unit of the base marker; extracting a factor from the image of the object; mapping the meaning unit with the factor; and generating a substitution marker comprising the image of the object and the mapped factor.

Exemplary embodiments of the present invention provide a method for providing Augmented Reality (AR) including acquiring an image of a 3-dimensional object associated with AR; analyzing a meaning unit of a 2-dimensional marker; extracting a factor of the image of the 3-dimensional marker; mapping the meaning unit to the factor; creating a substitution marker comprising the image of the 3-dimensional object and the mapped factor; and displaying the substitution marker, with AR information corresponding to the 2-dimensional marker.

It is to be understood that both foregoing general descriptions and the following detailed description are exemplary and explanatory and are intended to provide further explanation of the invention as claimed. Other features and aspects will be apparent from the following detailed description, the drawings, and the claims.

### BRIEF DESCRIPTION OF THE DRAWINGS

The accompanying drawings, which are included to provide a further understanding of the invention and are incorporated in and constitute a part of this specification, illustrate embodiments of the invention, and together with the description serve to explain the principles of the invention.

FIG. 1 is an Augmented Reality (AR) providing apparatus according to an exemplary embodiment of the present invention.

FIG. 2A and FIG. 2B illustrate a base marker and meaning units of the base marker according to an exemplary embodiment of the present invention.

FIG. 3A and FIG. 3B illustrate a substitution marker and marker factors of the substitution marker according to an exemplary embodiment of the present invention.

FIG. 4 illustrates a mapping relationship between a base marker and an object according to an exemplary embodiment of the present invention.

FIG. 5 is a flowchart illustrating a method for providing Augmented Reality (AR) according to an exemplary embodiment of the present invention.

FIG. 6 is a view for explaining extracting marker factors according to an exemplary embodiment of the present invention.

FIG. 7 illustrates a user interface screen according to an exemplary embodiment of the present invention.

FIG. 8 is a view for explaining mapping base markers to an object according to an exemplary embodiment of the present invention.

FIG. 9 is a view for explaining mapping a plurality of base markers to an object according to an exemplary embodiment of the present invention.

FIG. 10 is a view for explaining mapping base markers to an object according to an exemplary embodiment of the present invention.

FIG. 11 illustrates a 3-dimensional marker according to an exemplary embodiment of the present invention.

FIG. 12 illustrates a 3-dimensional marker according to an exemplary embodiment of the present invention.

Throughout the drawings and the detailed description, unless otherwise described, the same drawing reference numerals will be understood to refer to the same elements, features, and structures. The relative size and depiction of these elements may be exaggerated for clarity, illustration, and convenience.

### DETAILED DESCRIPTION OF THE ILLUSTRATED EMBODIMENTS

The invention is described more fully hereinafter with reference to the accompanying drawings, in which embodiments of the invention are shown. This invention may, however, be embodied in many different forms and should not be construed as limited to the embodiments set forth herein. Rather, these embodiments are provided so that this disclosure is thorough, and will fully convey the scope of the invention to those skilled in the art. In the drawings, the size and relative sizes of layers and regions may be exaggerated for clarity. Like reference numerals in the drawings denote like elements.

The terminology used herein is for the purpose of describing particular embodiments only and is not intended to be limiting of the invention. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof. It will be understood that for the purposes of this disclosure, "at least one of each" will be interpreted to mean any combination the enumerated elements following the respective language, including combination of multiples of the enumerated elements. For example, "at least one of X, Y, and Z" will be construed to mean X only, Y only, Z only, or any combination of two or more items X, Y, and Z (e.g. XYZ, XZ, YZ, X).

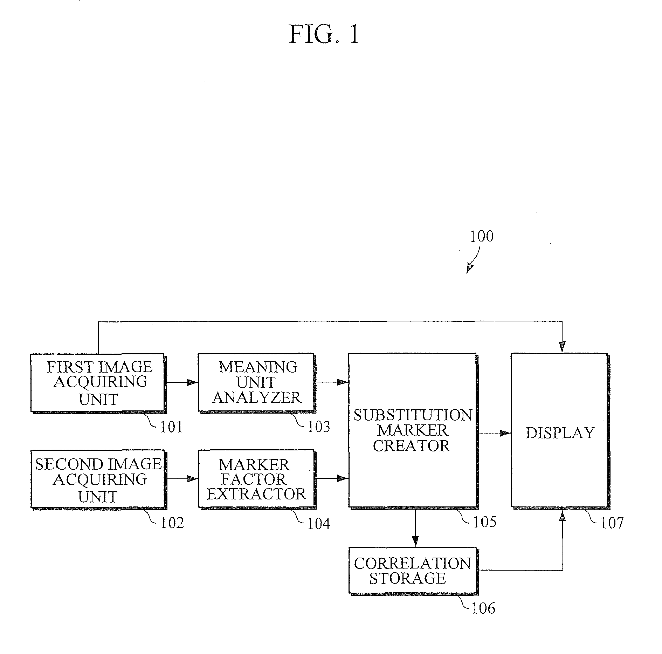

FIG. 1 is an Augmented Reality (AR) providing apparatus according to an exemplary embodiment of the present invention.

Referring to FIG. 1, the AR apparatus 100 may be a part of a mobile terminal (for example, a smart phone) which may photograph a marker related to AR which marker causes AR to be displayed on an image of the photographed marker, or on a part of an AR application which is executable by such a mobile terminal.

If the marker is recognized, the AR apparatus 100 may create a substitution marker or an instant marker that serves as a substitute for the original marker based on an arbitrary object. Subsequently, an AR may be applied or displayed along with the substitution marker or instant marker. For example, if an AR application in which a user photographs a marker printed on a paper with a smart phone and displays the photographed marker on a preview screen, a virtual avatar may then display a specific motion at the marker on the preview screen. In this case, according to the AR apparatus 100, a user can map an original marker's characteristics, or meaning units, to characteristics, or marker factors, of an arbitrary object (for example, a credit card or a name card) and then use the mapped arbitrary object as a marker. Thus, an arbitrary object is displayed on the preview screen such that a virtual avatar motions on the object displayed on the preview screen.

As illustrated in FIG. 1, the AR apparatus 100 includes a first image acquiring unit 101, a second image acquiring unit 102, a meaning unit analyzer 103, a marker factor extractor 104, a substitution marker creator 105, a correlation storage 106 and a display 107.

The first image acquiring unit 101 acquires an image of a base marker for AR. According to the current example, the "base marker" indicates a general 2-dimensional marker that may be printed on a paper, etc. An image of a base marker may be obtained when the first image acquiring unit 101 photographs a base marker displayed on a particular part of an object. Alternatively, the first image acquiring unit 101 may download an image of a base marker from an external server or may receive it from another terminal or apparatus.

The second image acquiring unit 102 acquires an image of an object. The object may be an arbitrary object that is used as a substitute marker. For example, the second image acquiring unit 102 may include a camera module that photographs an arbitrary object. This image may be retrieved through the instruction of a user.

The meaning unit analyzer 103 analyzes a meaning unit of the base marker acquired by the first image acquiring unit 101. According to an example, the "meaning unit" may indicate a meaning factor that is defined between the base marker and an AR application. For example, a meaning unit of a base marker may determine which or how an AR is displayed or functions. In other words, an AR application may determine to display information in a specific manner based on an output from the meaning unit of a base marker.

The meaning unit may define AR information in the entire base marker or a part of the base marker image. For example, a part of a base maker may be defined by a location in which AR information is displayed, or a part defined by a direction in which AR information is displayed, or a part that defines operation in which or how the AR information is expressed, etc. However, these are only exemplary and other parts than the above-mentioned parts may be defined as the meaning unit.

The marker factor extractor 104 extracts a factor from the second image acquiring unit 102 that may correspond to the output of the meaning unit analyzer 103. For example, the factor may be referred to as a marker factor. That is, the "marker factor" can be correlated to a component of a marker, and may be a characteristic pattern, shape or color distinguished from other parts, or a positional relationship or correlation between characteristic factors distinguished from other parts, etc.

According to an example, the marker factor extractor 104 may extract the shape of the object as a marker factor based on the object image acquired by the second image acquiring unit 102.

As another example, the marker factor extractor 104 may recognize a character or picture in the object of the image, and extract the recognized character or picture as a marker factor.

As another example, the marker factor extractor 104 may extract a shape or color related to the object of the image. The marker factor extractor 104 may extract the shape factor by segmenting the object image into a plurality of grid cells, calculating a grid value of each grid cell using an average value of pixel values of the grid cell and grouping grid cells having similar grid values.

There are numerous techniques that may be used to determine marker factors. Thus, in addition to the techniques disclosed herein, other techniques may be used as well.

The substitution marker creator 105 creates a substitution marker by mapping the output of the meaning unit analyzer 103 to the output of marker factor extractor 104. Accordingly, in the current example, the "substitution marker" corresponds to the base marker and may mean a 2- or 3-dimensional object that may be substituted for the base marker.

After the substitution marker creator 105 maps the output of the meaning unit analyzer 103 to the marker factor extractor 104, the correlation storage 106 stores the mapping relationship or correlation. For example, the correlation storage 106 may store information indicating which meaning unit is mapped to which marker factor of the object.

The display 107 uses the substitution marker created by the substitution marker creator 105 and the correlation stored in the correlation storage 106 to display and execute AR based on the base marker to be displayed or executed with the use of the substitution marker. For example, the display 107 may display AR related to the base marker using the substitution marker.

Also, specific AR may be implemented based on the base marker acquired by the first image acquiring unit 101 or based on the substitution marker that substitutes for the base marker, according to a selection, which may be chosen by a user. If AR is implemented through the substitution marker, the substitution marker may be created by providing a notice message informing that an object image to be used as a substitution marker is ready to be inputted and mapping the base marker image to an object image input may occur. Accordingly, the received AR information is based on a substitution marker or an instant marker, as well as a base marker.

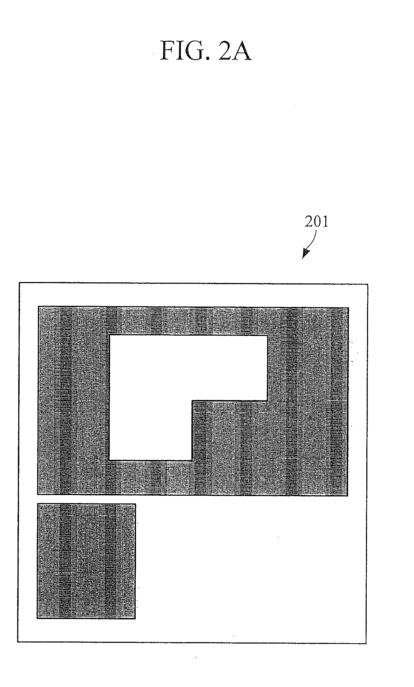

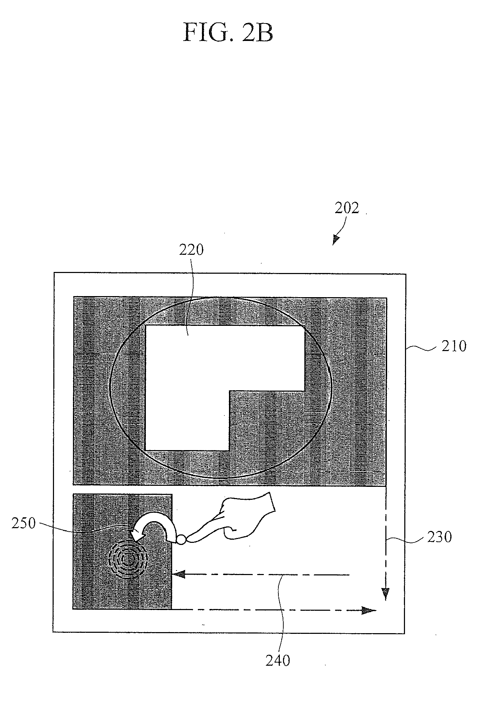

FIG. 2A and FIG. 2B illustrate a base marker and meaning units of the base marker according to an exemplary embodiment of the present invention.

As illustrated in FIG. 2A, the base marker 201 is a 2-dimensional image code that is readable by a computer or terminal. The image of the base marker 201 may be extracted from a photographed picture or downloaded, for example through a service network.

As illustrated in FIG. 2B, the base marker 201 shown includes 5 meaning units 210, 220, 230, 240 and 250. The first meaning unit 210 corresponds to the image of the base marker 201 and is a part that indicates whether to execute AR information (or which virtual image) if the base marker 201 is recognized. The second meaning unit 220 is a part that indicates the kinds of AR information if there multiple pieces of AR information to be executed. The third meaning unit 230 is a part that indicates a location at which the AR information is displayed. The fourth meaning unit 240 is a part that indicates a direction in which the AR information is displayed. The fifth meaning unit 250 is a part that decides an operation that the AR information is associated with. For example, if a specific behavior is performed corresponding to the fifth meaning unit 250, such as touching a device, a virtual image may perform an operation (for example, rotation, inversion, scale-down, etc. of AR information).

As illustrated in FIG. 2A and FIG. 2B, various kinds of meaning units 210, 220, 230, 240 and 250 may be represented in the base marker 201, with each meaning unit being defined in advance in association with the base marker 201 and an AR application corresponding to the base marker 201.

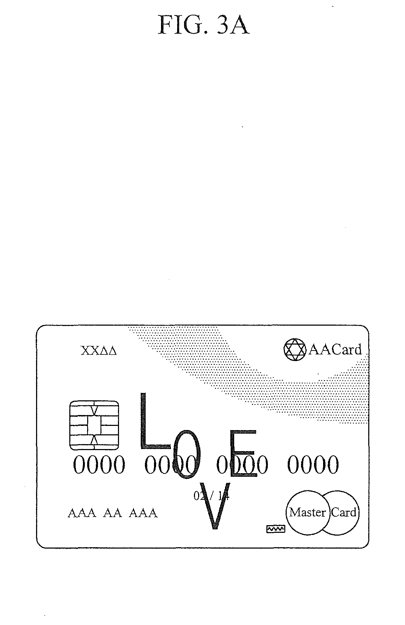

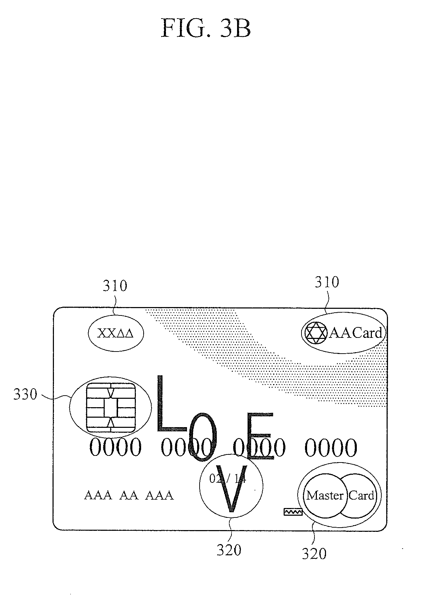

FIG. 3A and FIG. 3B illustrate a substitution marker and marker factors of the substitution marker according to an exemplary embodiment of the present invention.

As illustrated in FIG. 3A, the substitution marker 301 may be a credit card. Thus, a user may use the base marker 201 (see FIG. 2A) or the credit card 301 as a medium to view AR information.

As illustrated in FIG. 3B, marker factors of the credit card 301 for using the credit card 301 as a substitution marker may be specific character areas 310, specific picture areas 320, or a characteristic part 330 that are distinguished from other parts. The parts that are extracted as marker factors from a certain object such as the credit card 301 may vary depending on a desired use. Accordingly, the marker factors 310, 320 and 330 illustrated in FIG. 3B are only exemplary.

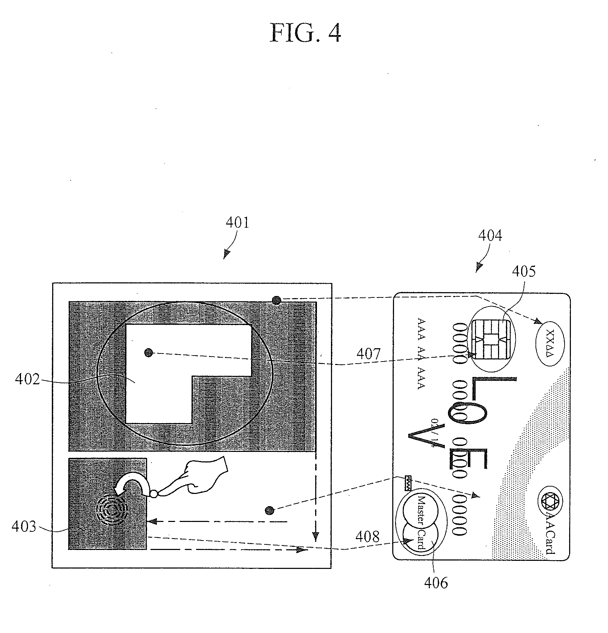

FIG. 4 illustrates a mapping relationship between a base marker and marker factors of an object according to an exemplary embodiment of the present invention.

Referring to FIG. 4, meaning units 402 and 403 in the image of the base marker 401 are respectively mapped to marker factors 405 and 406 in the image of the object 404. Then, mappings 407 and 408 between the meaning units 402 and 403 and the marker factors 405 and 406 are stored. Accordingly, the object image 404 may be used as a substitution marker. In other words, by allowing a user to display a credit card designated as a substitution marker on a preview display associated with a mobile terminal, AR may be implemented using a displayed image of the credit card.

In the example illustrated in FIG. 4, the mappings between the meaning units to the marker factors may vary. For example, the mapping may be performed based on similarity in shape or color between meaning units and marker factors, or sequentially based on weights or priorities assigned to individual marker factors. However, these are also only exemplary and various mapping methods may be implemented.

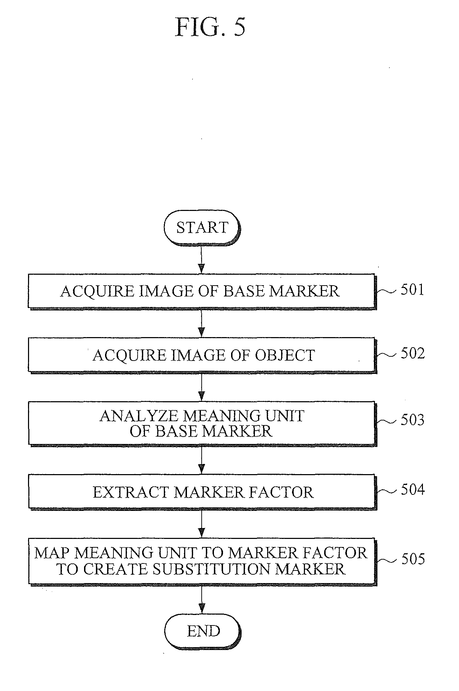

FIG. 5 is a flowchart illustrating a method for providing Augmented Reality (AR) according to an exemplary embodiment of the present invention.

The method may be started after inquiring a user about whether to implement AR using a substitution marker.

Referring to FIG. 5, an image of a base marker is acquired (501). The first image acquiring unit 101 illustrated in FIG. 1 may acquire an image 201 of a base marker as illustrated in FIG. 2A by photographing the base marker or downloading the base marker image 201.

An image of an object is acquired (502). The second image acquiring unit 102 illustrated in FIG. 1 may acquire an object image 301 as illustrated in FIG. 3A by photographing a specific object such as a credit card.

After which, a meaning unit of the base marker is analyzed (503). The meaning unit analyzer 103 may analyze a meaning unit of the base marker, as illustrated in FIG. 2B.

Then, a marker factor corresponding to the meaning unit of the base marker is extracted from the object image (504). The marker factor extractor 104 illustrated in FIG. 1 may extract marker factors 310, 320 and 330 as illustrated in FIG. 3B.

Then, the meaning unit of the base marker may be mapped to a marker factor of the object, so that a substitution marker is created (505). The substitution marker creator 105 illustrated in FIG. 1 may perform mapping to create a substitution marker, as illustrated in FIG. 4.

Mapping between meaning units and marker factors may be performed in various manners. For example, arbitrary mapping may also be used. Arbitrary mapping may be defined as randomly selecting marker factors, and then mapping meaning units to the selected marker factors. As another example, mapping based on a similarity between meaning units and marker factors may be performed. For example, it is possible to map selected meaning units to marker factors having similarity in shape, location or color to the meaning units.

After the substitution marker is created, mapping between the meaning units and the marker factors may be stored. The information may be stored in the correlation storage 106 illustrated in FIG. 1.

The method may further include an operation of implementing AR based on the created substitution marker. For example, the display 107 illustrated in FIG. 1 may provide AR corresponding to the original base marker using the created substitution marker and the stored correlation.

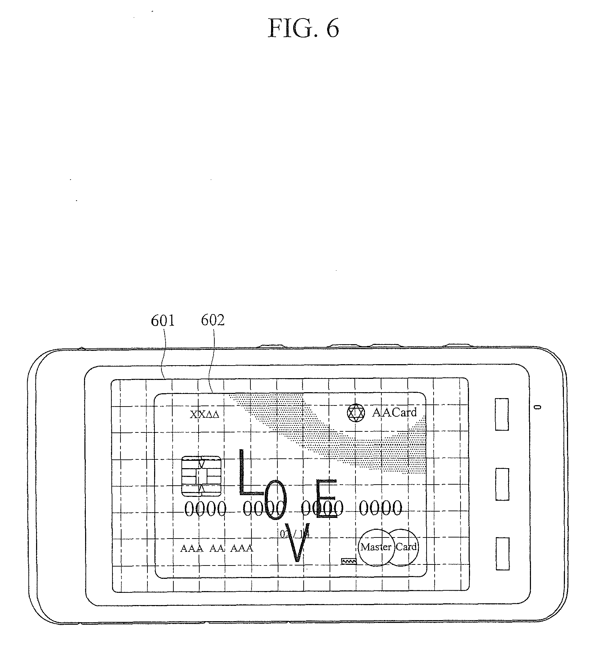

FIG. 6 is a view for explaining extracting marker factors according to an exemplary embodiment of the present invention.

Referring to FIG. 1 and FIG. 6, the marker factor extractor 104 segments a preview screen 601 of an object 602 into grid cells, which each may have a reference size. Then, the marker factor extractor 104 arranges the grid cells in the order of grid cells having greater changes in image data to grid cells having fewer changes in image data. Then, each grid cell may be extracted as a marker factor. In another example of marker factor extraction, if the amount of a data change between a grid cell and its adjacent grid cells is less than a threshold value, the grid cells may be treated as the same grid cell.

However, various methods other than the method described above with reference to FIG. 6 may be used to extract specific parts from an image to form a substitution marker. For example, a characteristic shape or form in a grid cell may be extracted as a marker factor. If an object 602 has a main color, i.e. a color forming a major proportion of the object, a part having a different color from the main color may be extracted as a marker factor. If no main color exists in an object, a specific area of the object may be arbitrarily designated and a color of the area is compared to that of its adjacent area, after which, the comparison may prompt an extracting of a marker factor.

Also, a specific color of an object that may be used as a substitution marker may be extracted as a marker factor. For example, if a red color, a yellow color and a blue color are recognized from a certain object, the red, yellow and blue colors may be respectively mapped to parts A, B and C of an original marker.

If marker factors are extracted, information indicating the number of the extracted marker factors may be analyzed. For example, when L marker factors based on shape and M marker factors based on color are extracted, priority may be assigned as to primarily map the L marker factors and then secondarily map the M marker factors. If the total number L+M of marker factors is insufficient to map all meaning units identified on the original marker, a message indicating that another object image may be input to reach the L+M number, may be displayed.

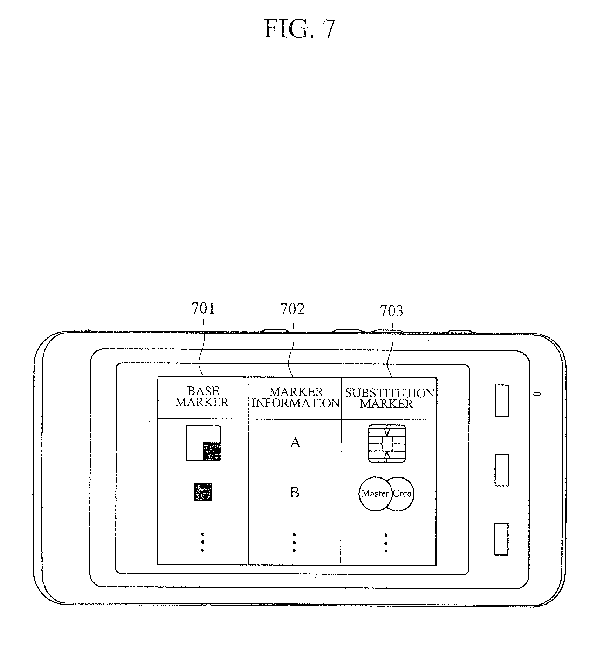

FIG. 7 illustrates a user interface screen according to an exemplary embodiment of the present invention.

Referring to FIG. 7, the user interface screen may include a column 701 on which base markers are displayed, a column 702 on which brief information about the base markers is displayed, and a column 703 on which substitution markers are displayed. The brief information about the base markers may be names of AR applications corresponding to the base markers or information about meaning units of the base markers.

In the example of FIG. 7, a user may touch the column 703 on which the substitution markers are displayed to select a desired substitution marker, and if the desired substitution marker is selected, an AR application of a base marker to which the selected substitution marker is mapped is executed.

Also, if there are multiple substitution markers, the user may desire to know a correlation to an AR application. Accordingly, the substitution markers may be displayed as a list or thumbnail or in the form of a folder, in association with their corresponding AR applications.

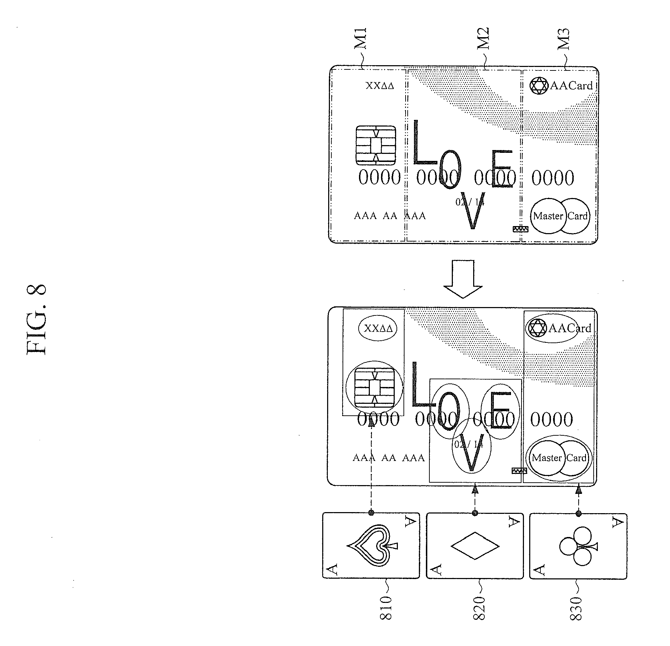

FIG. 8 is a view for explaining mapping base markers to an object according to an exemplary embodiment of the present invention.

Referring to FIG. 8, an object that is to be used as a substitution marker is segmented into areas M1, M2 and M3. Each of the areas M1, M2 and M3 may be mapped to a base marker. For example, as shown in FIG. 8, a first base marker 810 is mapped to the first area M1, a second base marker 820 is mapped to the second area M2 and a third base marker 830 is mapped to the third area M3. If multiple base markers are mapped to one object, marker factors of a substitution marker may be extracted individually for the respective areas M1, M2 and M3.

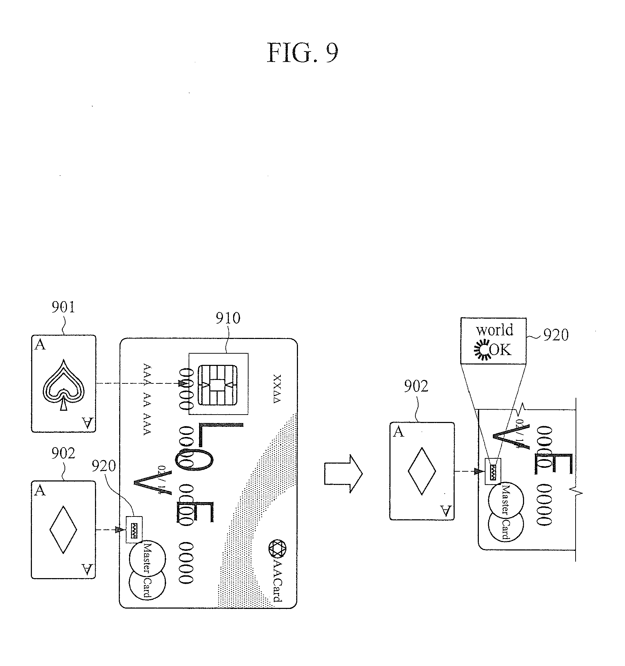

FIG. 9 is a view for explaining mapping base markers to an object according to an exemplary embodiment of the present invention.

Referring to FIG. 9, a first base marker 901 is mapped to a first part 910 of an object and a second base marker 902 is mapped to a second part 920 of the object. The second part 920 is relatively smaller than the first part 910. The first part 910 may be recognized if the object is displayed with its original size on a preview screen, and the second part 920 may be recognized if the object is enlarged on a preview screen. Accordingly, a substitution marker corresponding to the second part 920 may be used as a hidden marker if viewed during the original size.

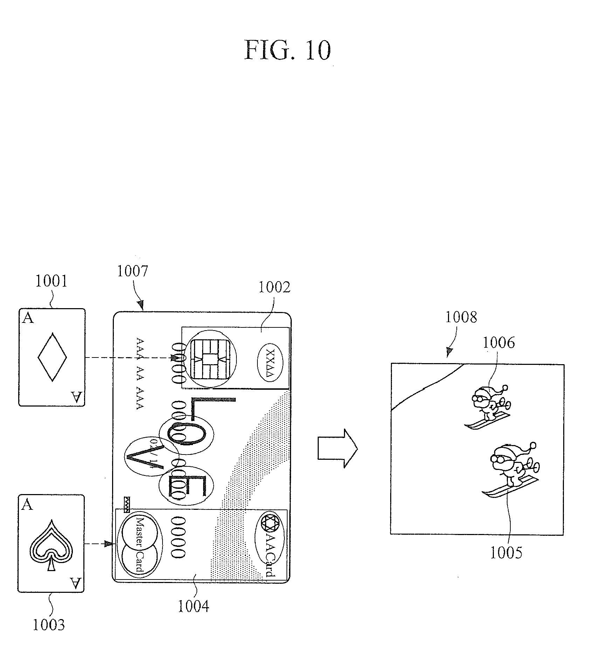

FIG. 10 is a view for explaining mapping base markers to an object according to an exemplary embodiment of the present invention.

Referring to FIG. 10, a first base marker 1001 is mapped to a first part 1002 of an object and a second base marker 1003 is mapped to a second part 1004 of the object. The first base marker 1001 represents AR of a virtual object 1005 and the second base marker 1003 represents AR of a virtual object 1006. Accordingly, if a user implements AR using a substitution marker 1007 to which the first and second base markers 1001 and 1003 are mapped, an executed AR causing the display of virtual objects 1005 and1006 may occur on a display 1008.

As another example, it is possible that if there are multiple mapping points in an object, a substitution marker may be created by mapping various base markers to the object. For example, in the case of a 3-dimensional object such as a die whose respective sides have different characteristics, different base markers may be mapped to the respective sides of the die. Also, in the case of a book, substitution markers may be created in a manner to assign a base marker to each page of the book.

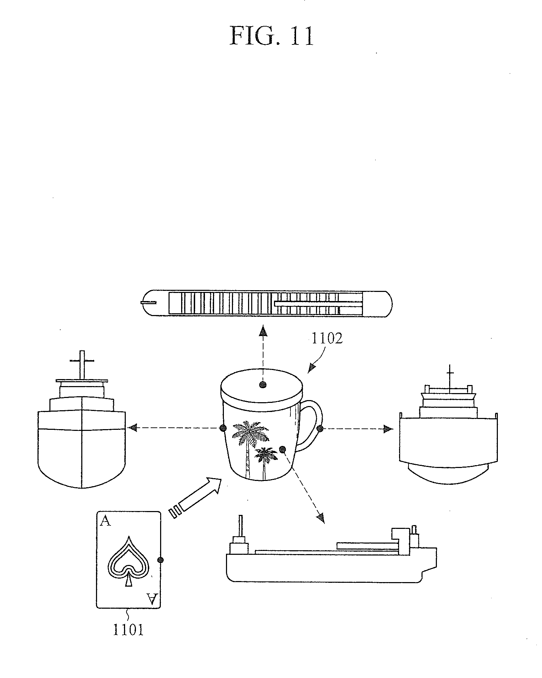

FIG. 11 illustrates a 3-dimensional marker according to an exemplary embodiment of the present invention.

Referring to FIG. 11, a base marker 1101 related to a ship is mapped to a 3-dimensional object 1102. An image of a 3-dimensional object 1102, or various parts of the 3-dimensional object 1102, may be acquired through an image acquisition unit, such as a camera or a file. The 3-dimensional object 1102 has up, down, left and right attributes as well as a front image. Accordingly, the up, down, left and right attributes of the 3-dimensional object 1102 may be mapped according to up, down, left and right attributes of the ship. For example, when the base marker 1101 related to the ship is mapped to a cup 1102, a user may implement AR in a manner to display the cup 1102 on a preview screen and photograph the up, down, left and right sides of the cup 1102 so that the up, down, left and right sides of the ship are displayed according to the photographed directions. There are cases where an original marker is a 2-dimensional image and AR information is a 3-dimensional image. In these cases, there is limitation in implementing an AR image with the original marker. However, by mapping a 2-dimensional marker to a 3-dimensional object, and using that 3 dimensional as a substitution marker, as in the example illustrated in FIG. 11, AR having a 3-dimensional attribute may provide a greater viewing ability or ability to manipulate the displayed image of the ship.

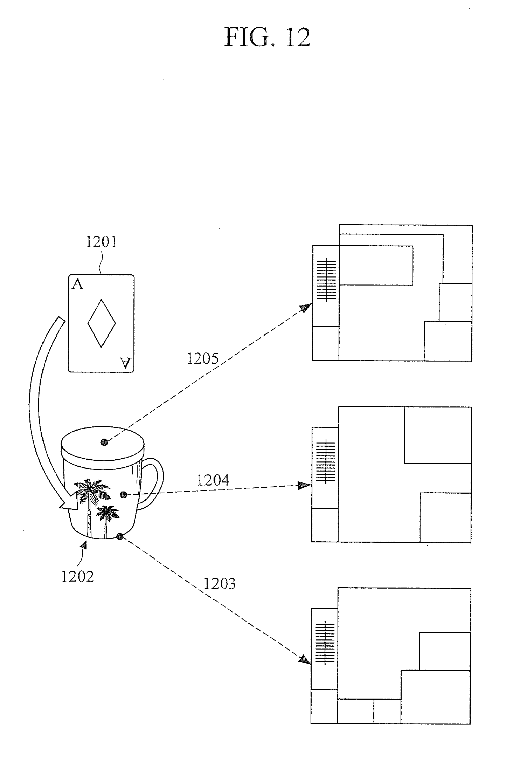

FIG. 12 illustrates a 3-dimensional marker according to an exemplary embodiment of the present invention.

Referring to FIG. 12, a base marker 1201 related to a building drawing is mapped to a 3-dimensional object such as a cup 1202. If the building is a three story building, the bottom of the cup 1202 represents the first floor 1203 of the building, the middle part of the cup 1202 represents the second floor 1204 of the building and the upper part of the cup 1202 represents the third floor 1205 of the building. As such, if the 3-dimensional object such as the cup 1202 is used as a substitution marker, additional information as well as original AR may be displayed according to various attributes (for example, a specific side of the cup 1202, various figures drawn on the specific side, etc.) of the 3-dimensional object. Thus, the 3-dimensional operability and shape of a cup 1202 may provide the user a greater viewing ability or ability to manipulate the displayed image of the 3-D object.

As described above, in the AR apparatus and method for providing AR according to the above-described examples, since a substitution marker capable of substituting for a base marker is created and AR is implemented using the substitution marker, AR may be implemented when there is no base marker and also the substitution marker is used to implement extended AR.

Meanwhile, the above-described examples may be implemented as non-transitory computer-readable codes in computer-readable recording media. The computer-readable recording media includes all kinds of recording devices that store data readable by a computer system.

Examples of computer-readable media include ROM, RAM, CD-ROM, magnetic tapes, floppy disks, optical disks and the like. Also, the computer-readable media may be implemented with the form of carrier wave (for example, transmission through the Internet). In addition, a computer-readable storage medium may be distributed among computer systems connected through a network and computer-readable codes or program instructions may be stored and executed in a decentralized manner. Also, functional programs, codes and code segments for accomplishing the present invention can be easily construed by programmers skilled in the art to which the present invention pertains.

A number of examples have been described above. Nevertheless, it will be understood that various modifications may be made. For example, suitable results may be achieved if the described techniques are performed in a different order and/or if components in a described system, architecture, device, or circuit are combined in a different manner and/or replaced or supplemented by other components or their equivalents. Accordingly, other implementations are within the scope of the following claims.

It will be apparent to those skilled in the art that various modifications and variation can be made in the present invention without departing from the spirit or scope of the invention. Thus, it is intended that the present invention cover the modifications and variations of this invention provided they come within the scope of the appended claims and their equivalents.
An Augmented Reality (AR) providing method using an instant marker or a substitution marker is provided. According to an example, the instant marker or the substitution marker is created based on a 3-dimensional object. A meaning unit of an original 2-dimensional marker is analyzed and a marker factor corresponding to the meaning unit is extracted from the image of an object that is to be used to the instant marker or substitution marker. The meaning unit is mapped to the marker factor to create the instant marker or the substitution marker based on the object, so that a user may use AR using the instant marker or substitution marker.

## Claims

1. An Augmented Reality (AR) apparatus comprising:
a first image acquiring unit adapted to acquire an image of a base marker associated with AR;
a second image acquiring unit adapted to acquire an image of an object;
a meaning unit analyzer adapted to analyze a meaning unit of the image of the base marker;
a marker factor extractor adapted to extract a factor from the image of the object; and
a substitution marker creator adapted to map the factor with the meaning unit to create a substitution marker comprising the image of the object and the mapped factor.

2. The AR apparatus of claim 1, wherein the meaning unit analyzer is adapted to analyze the meaning unit based on AR information corresponding to the base marker, preferably based on at least one of
a position at which the AR information is displayed,
a direction in which the AR information is displayed, and
an operation associated with the AR information.

3. The AR apparatus of claim 1 or 2, wherein the marker factor extractor is adapted to recognize a shape of the object, a character, or a picture from the image of the object, and extracts the factor based on at least one of:
the shape,
the character,
the picture, or
a positional relationship between the shape, the character and the picture.

4. The AR apparatus of any of claims 1 to 3, wherein the marker factor extractor is adapted to extract the factor based on a shape or a color from the image of the object, and
wherein, preferably, the marker factor extractor is adapted to segment the image of the object into a plurality of grid cells, to calculate a grid value of each grid cell using an average of pixel values of the grid cell and to group grid cells having substantially similar grid values to extract the factor.

5. The AR apparatus of any of claims 1 to 4, wherein the substitution marker creator ia adapted to substitute the substitution marker for the base marker.

6. The AR apparatus of any of claims 1 to 5, further comprising a correlation storage adapted to store a result of mapping the factor with the meaning unit.

7. A method for providing Augmented Reality (AR), comprising:
acquiring an image of a base marker associated with AR;
acquiring an image of an object;
analyzing a meaning unit of the base marker;
extracting a factor from the image of the object;
mapping the meaning unit with the factor; and
generating a substitution marker comprising the image of the object and the mapped factor.

8. The method of claim 7, wherein the meaning unit is analyzed based on AR information corresponding to the base marker, preferably based on at least one of
a position of the AR information is displayed,
a direction displayed of the AR information is displayed, and
an operation of the AR information.

9. The method of claim 7 or 8, wherein extracting the factor comprises recognizing a shape, or a character, or a picture, and extracting, as the factor, at least one of:
the shape,
the character,
the picture, or
a positional relationship between the shape, character and picture.

10. The method of any of claims 7 to 9, wherein extracting the factor further comprises extracting the factor based on a shape or a color of the image of the object,
wherein, preferably, extracting the factor based on shape further comprises:
segmenting the image of the object into a plurality of grid cells;
calculating a grid value of each grid cell using an average of pixel values of the grid cell; and
grouping grid cells having the substantially similar grid values.

11. The method of any of claims 7 to 10, wherein generating the substitution marker further comprises:
substituting the substitution marker for the base marker.

12. The method of any of claims 7 to 11, further comprising storing a result of mapping the meaning unit with the factor.

13. The method of any of claims 7 to 12, wherein the base marker is a 2-dimensional marker for AR, wherein the object is a 3-dimensional object associated with AR, and wherein the method further comprises:
displaying the substitution marker, with AR information corresponding to the 2-dimensional marker.

14. The method of claim 13, wherein the displaying occurs if the 3-dimensional object is recognized.

15. The method of any of claims 7 to 14, further comprising:
determining whether the base marker is recognized; and
if the base marker is recognized, inquiring, whether to provide the AR based on the base marker or the substitute marker.
